Europäisches Patentamt

(19) European Patent Office

Office européen des brevets

(11) Publication number: **0 234 711**
A2

(12) **EUROPEAN PATENT APPLICATION**

(21) Application number: **87300481.6**

(22) Date of filing: **21.01.87**

(51) Int. Cl.³: **H 04 M 15/04**

(30) Priority: **21.01.86 GB 8601399**

(43) Date of publication of application:
**02.09.87 Bulletin 87/36**

(84) Designated Contracting States:
**AT BE CH DE ES FR GR IT LI LU NL SE**

(71) Applicant: **Snowflake Systems Limited
Mountbatten House Victoria Street
Windsor SL4 1HE(GB)**

(72) Inventor: **Denner, Roger
Midsummer Cottage Fairview Lane
Flackwell Heath Bucks. HP10 9EN(GB)**

(72) Inventor: **Clifford, Leslie
17 St. Vincent Avenue
Walton-on-Thames Surrey KT12 1PA(GB)**

(74) Representative: **Dodd, David Michael et al,
ROYSTONS 531 Tower Building Water Street
Liverpool L3 1BA(GB)**

(54) Information transmission/processing.

(57) Information transmission and processing system comprises a central data collection and processing station (20) and a plurality of user stations each including a telephone handset (10) and communicating with the central station over telephone grade connections (12). Each user station includes a connection (14) and signal processing provision (Figures 2 to 5) for input thereto of signals from at least one other associated resource (D, T, MF, etc) concerning use of that resource and for output of corresponding data signals to the central station (20) for logging/processing purposes thereat, and user identification means (via CS) whereby use of the user station including any resource (D, T, MF, etc) associated therewith can be correlated with any of particular authorised users and/or cost allocations.

FIG.1

Title:    Information transmission/processing

## DESCRIPTION

This invention relates to information transmission and processing systems.

Automatic logging of usage of telephone lines/ extensions is well known  not only by the telephone company in order to charge customers, but also in customers' telephone equipment for various reasons including accurate monitoring of communications aspects of a business and costs control/allocation.

It is an object of this invention usefully to extend such automatic logging to the use of other resources, particularly, though not necessarily exclusively, within an office environment.

According to one aspect of this invention, there is provided a system having a central data collection and processing station and a plurality of user stations offering the facilities of telephone handsets and communicating with the central station over suitable telephone type connections, wherein one or more, usually each, of the user stations further includes a connection and signal processing provision whereby signals can be input thereto from another resource (for example copier, telex, word processor terminals, even entry to a particular area) indicating usage thereof and output from that user station to the central station for logging/processing purposes thereat, and a user identification provision whereby each use (conveniently called a transaction herein) of the user station including any resource connected thereto can be correlated with any of particular authorised users/projects.

The central station may be any suitably programmed microcomputer which itself could, if desired, be integrated into a larger computer system, for example as an active terminal resource thereof.

However, the nature of the user stations hereof constitute a particular aspect of this invention by way at least of said resource connection and signal transmitting/processing provision (in relation to transactions) and said user identification provision preferably, of course, in combination with enhanced telephone handset facilities.

One suitable user station incorporates means conveniently a microprocessor, providing required control functions and serving to assemble transaction data and store same for sending to the central station, such transaction data typically including the nature of the transaction, e.g. telephone call or other resource identifier and directly related parameters such as date, time, duration, units of use even cost (though that might equally well be computed at the central station), user identifier, and/or further any cost allocations such as via job or customer identifier applied by the user. In addition, it is envisaged that each user station incorporates or can incorporate access control as to which of identified users is authorised for any or selected use of that station.

Practical user identification is by way of a card for each user and a card reader at each user station, say of magnetic strip type as currently used for so-called credit cards. Then, of course, the cards will effectively control access to the user station, but a further level of access control and/or transaction allocation can conveniently be provided by way of key-entering of at least part of another user's identifier. It is envisaged that support staff may effect certain transactions on behalf of other authorised users by entering the latters identifiers after their own card. Also, provision can be made to interrogate any user at their next attempted transaction regarding outstanding details of any previous transaction.

It may be further advantageous for user identification to be by way of a more sophisticated card or key, of the so-called "smart" type, say incorporating a semiconductor chip, which can be a non-volatile sequential access memory device for which latest floating gate N-channel EPROM technology is suitable. Then, using different EPROM memory registers, there is greater capacity for identifying company/subsidiary/department, user and resources allocated on the card or key, also a checking provision, say based on adding the other numbers, conveniently as an adjuster that brings such total to all-zero.

Various other useful features will become apparent from the following description of specific implementation of embodiments of this invention now made with reference to the accompanying drawings, in which:

Figure 1 is a block diagram of a typical installation;

Figures 2, 3 and 4 are block circuit diagrams relevant to user station apparatus; and

Figure 5 explains "smart" card operation.

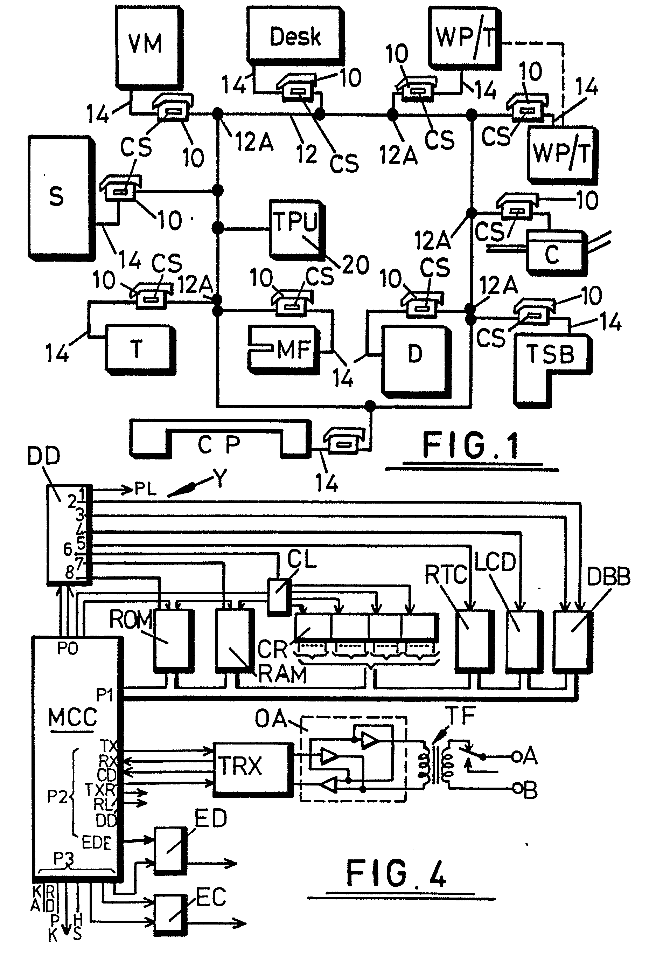

Referring first to Figure 1, a plurality of user stations 10 are shown offering telephone facilities via the customary telephone connection 12, see junctions 12A representing jacks, and further having connections 14 to particular resources, such as word processor/computer terminal units (WP/T), copier (C), telephone switchboard (TSB), door control (D), car park (CP), mail franking machine (MF), telex (T), stationery supplies (S), and vending machine (VM). At a desk (D), the resource connection 14 is not shown connected, but could, of course, be to a computer terminal. A central computer unit is also shown at 20 connected to the telephone connection 12 and will control all transaction-related information transfers from the user stations 10.

The user stations 10 have two main functions, one as telephones then preferably as extensions with automatic external-call dial-out capability relative to the system indicated at the switchboard station TSB, but with call logging, and the other as substations to the central computer unit 20 so as to supply the latter with said transaction-related information in a fail-safe and orderly manner both for telephone call logging and for any user-station-connected resource. It is intended that at least all resource use and external calls be subject to authorisation, say by cards, see cards slots CS on user stations 10 in Figure 1, though at least emergency if not all internal calls will not be so dependent. Operation via credit type cards will first be specifically described by more sophisticated smart cards or keys and appropriate readers can be used.

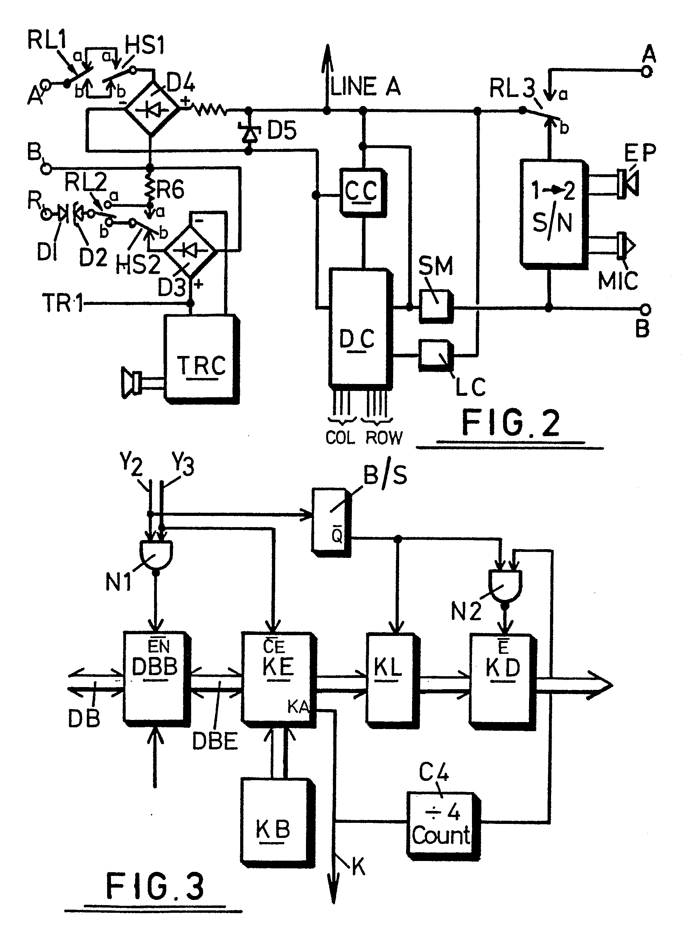

Telephone operation may be as in Figure 2, which uses three readily available chips in circuitries representing dedicated tone ringing (TRC), dialling (DC) and speech network (S/N) indicated as involving a two-to-four wire conversion device operating in a bridge mode. Various detail ancillary components and connections are omitted as being standard practice, for example diode voltage clamping, resistor ripple supply for internal oscillator modulation, external ceramic reasonator with resistor/capacitor control, resistor/capacitor pitch bias control, and volume control for the tone ringing circuitry TRC;
also circuitry for constant current supply (CC) which may
be of transistor diodes type, speech monitoring provision
(SM) which may be of FET type, circuitry for line current
control (LC) which may be of transistor type, external
resonator provision say of ceramic resonator/capacitors
type and resistor/capacitor type click suppression, and
mute timing provision for the dialling circuitry (DC); and
impedance matching for earpiece (EP) and microphone (MIC)
with diode dampling and capacitive filter shaping,
respectively, RF suppression, voltage clamping, signal
level setting, side tone balancing, ac impedance regulation,
gain characteristic setting, receive input decoupling, and
line matching for the speech network (S/N).

Basics of operation of the circuitry of Figure 2 are
dependent on handset contacts HSI, HS2 and relays contacts
RL1, 2, 3 shown relative to a three-line, shunt-mode
connection of private branch exchanges with loop disconnect
type dialling satisfying British Standards 6305 and 6317.
Thus ring detection is from the ring line (R) via speech
isolation diodes D1, D2 through HS2 contact b in the
position shown and via diode bridge D3, with audible alarm
provision indicated at AP. If the handset is taken "off-
hook", HS2 will switch and short the ring line R via resistor
R6. The same effect is attainable via relay contact RL2.
In the "off-hook" state, contact HS1 puts line voltage on the diode bridge D4 and thereby supplies the remainder of the circuitry of Figure 2 via current limiting resistor R1 and transient protection diode D5, i.e. any incoming call is effectively acknowledged and normal speech is enabled. In connection with outgoing calls, input dial signals are indicated to the dialling circuit DC over four row (ROW) and three column (COL) lines as for a conventional push-button telephone keyboard, i.e. one set of imputs per key depression. Then, there will be speech muting via SM output to the speech network and line B and dial signals via line A until dialling is completed. A similar muting situation would apply to modem operation if, as is intended, relay contact RL3 serves a speech/modem selection purpose, which is further significant in that relay contacts RL1 have the same effect as handset contacts HS1 and it is intended that data messages of transaction-related information be transmissible in modem mode with the handset "on-hook". To that end, it is to be noted that the row/column inputs to the dialling circuitry DC are indicated in Figure 3 at DRC from a keyboard decoder KD via a latch KL from a keyboard encoder KE alternatively fed from a keyboard KB as such and from a data bus buffer DBB. It should be evident that the circuitry of Figure 3 effectively replaces the lines labelled ROW and COL in Figure 2.

It will be appreciated that the circuitry of Figures 2 and 3 is well-suited to the modem mode being entered automatically, say at replacement of the handset on a telephone call and/or at removal of a card for a telephone call or a resource use and/or at some other known and identifiable ending of a resource use, the effect being to switch the relay contacts RL1 2, 3 (most conveniently of an electronic type relay). Then, auto-dialling of the central computer 20 can be done from data bus buffer DBB whose other function is to read data signals from the keyboard encoder (in telephone mode) for local call logging purposes, see data bus DB and data bus extension DBE. Associated control logic includes data bus buffer enabling from a two input NAND gate N1 for dial out and keyboard output enable signals on lines Y2 and Y3 also serving in controlling the keyboard encoder KE (Y3), the latch KL (Y2 via bistable B/S) and the keyboard decoder KD (BS via another NAND gate N2 also receiving output from a divide-by-4 counter C4). The divide-by-4 counter C4 serves the useful function of permitting up to four dial-digit encodings without user card verification at least for emergency calls and modem auto-dialling, also local extension inter-calling if desired, see also line K that changes state when any key of the keyboard KB is operated and provides a signal for interrupting modem style operation should a user wish to use the telephone mode. Read/write control is also shown for the data bus buffer DBB at line R/$\overline{W}$.

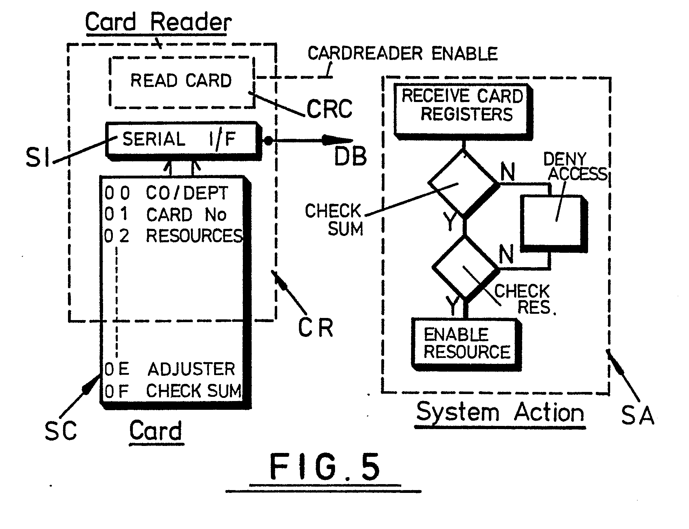

Local user-station control as above and otherwise is done via a microcomputer system, see Figure 4, using a microprocessor chip MCC of suitable type, for example Zilog Z8 which has multiple 8-bit porting, see P0-P3, associated with a program read-only memory (ROM) and a data store (RAM) both of which need only be of 8K capacity so that spare address lines (SA) can be used to control a device decoder (DD) for various device enablement over its outputs Y. Main address lines (MA), also from port P0, are shown going to ROM and RAM with enables thereto (from Y7, Y8) and to sequential addressing logic (CL) for a multi-field card reader (CR) such logic also being enabled by the device decoder (DD from Y6). Other units or devices controlled by the decoder DD are a real time clock (RTC), a display preferably of liquid crystal type (LCD), and the data bus buffer DBB previously discussed with reference to Figure 3. All such units are shown connected to the data bus DB at port P1 of the microprocessor chip MCC. It will be evident that all actions of the units ROM, RAM, CR, RTC, LCD and DBB are under miroprocessor control effectively via ports P0, P1 on a parallel bit transmission basis.

The other two ports P2, P3 of the microprocessor MCC are used for specific signal input and output purposes under program control (from ROM) as will now be described in relation to handling transaction message assembly and transmission to the central computer station 20.

Actual transmission is conveniently in serial manner between uses of user stations, and a transceiver TRX is shown for that purpose connected to the A, B telephone lines in basically conventional manner via a transformer TF and a suitable arrangement of operational amplifiers OA (passive components omitted) relative to its actual transmit and receive terminals TA, RA. Serial digital data transmitted and received use microprocessor terminals TX, RX, with provision also made for carrier detection (CD) basically indicating that the central computer station is ready to receive and/or transmission requesting (TXR) by the user-station, typically after each use of that station. Other lines of port P2 are shown as for relay operation for modem/speech mode (RL), dial disabling (DD) whilst in modem mode, and external device enablement (EDE) operative relative to a bistable device (ED) that is actually shown reset from a Port 3 line (EDC). Other Port 3 lines are shown for external device cost pulse and reset (ECP and ECR) relative to another bistable device (EC), detection of handset being on or off hook (HS), write protection release for RAM and real time clock (PR), ring detection for the telephone line (RD), and key pressing at the keyboard (KA). The two unused port 2 and 3 lines could be used in connection with monitoring local battery conditions, see also power low output (Y1) of the device decoder (DD), though powering from a mains transformer plug device is feasible for non-volatile RAM embodiments.

It will be clear from Figure 4 that the microprocessor MCC suitably program-controlled from the ROM can enable not only the writable store RAM but also the card reader CR for successive sensing of a user card assumed to have four fields and send binary signals over the data bus DB to the microprocessor MCC both for assessment of any restriction of access and for incorporation into transaction message assembly; further the real time clock RTC preferably to give start and finish times of any particular use also incorporated into the transaction message by the microprocessor MCC from signals on the data bus DB; the display LCD at least for some entries at the keyboard then via the buffer DBB also further for messages from the microprocessor MCC say concerning authorisation, transaction, elapsed time, cost, querying any outstanding details of previous transaction(s) by the same user, etc,; and the data bus buffer DBB in connection sending to the microprocessor MCC user-entered information signals such as any PIN number, identification of other person on whose behalf the use is being made, job/client identifier, telephone number dialled, resource use identification etc., accompanied by any appropriate operation of the display, and in connection with information signals from the microprocesor at least for automatic dialling of the central computer station for transaction message transfer thereto. It will, of course, be appreciated that once a transaction-message transfer is set-up, actual transfer will be serially via the transceiver.

A typical transaction message will preferably have some or all of fields for user's card identifier, any other user's identifier if the actual user is doing so on behalf of someone else, resource identification if a related resource is used, client or job identifier, other details such as telephone number dialled or further reference, date, start time, units of use whether in terms of time or quantity, and cost if the latter is not to be calculated at the central station.

There is significant advantage to be gained from a sophisticated authorisation system that uses so-called smart cards or keys incorporating a semiconductor chip allowing more information and a security check to be stored on the users' cards or keys, say using an EPROM chip treated by the microprocessor MCC as a peripheral memory. One suitable EPROM device is made by National Semiconductor (NM9306) and is accessible via a simple serial interface (MICROWIRE), say into one line of the data bus DB. Such a system allows use of at least three registers, 16-bit capacity for the chip mentioned, for purposes afore-mentioned, and to take advantage of two other registers, one for a check sum adjuster number, and the other as an all-zero actual check sum.

CLAIMS

1. Information transmission and processing system comprising a central data collection and processing station (20) and a plurality of user stations each including a telephone handset (10) and communicating with the central station over telephone grade connections (12), wherein each said user station further includes a connection (14) and signal processing provision (Figures 2-5) for input thereto of signals from at least one other associated resource (D, T, MF etc) concerning use of that resource and for output of corresponding data signals to the central station (20) for logging/processing purposes thereat, and user identification means (via CS) whereby use of the user station (10 etc) including any resource (D, T, MF etc) associated therewith can be correlated with any of particular authorised users and/or cost allocations.

2. A system according to claim 1, wherein the user station includes means, such as a programmed microprocessor (MCC), for providing control functions and for assembling data concerning use of the user station (10 etc) on a transaction basis including whether the use is a telephone call (HS, RL) or of an identified associated other resource and other use-related parameters (such as data, time, duration, units of use) including user identification and/or cost allocations.

3. A system according to claim 2, wherein each user-station (10 etc) includes function-controlled means (RL3) specifying alternative modes of operation, one being a voice telephone mode when the telephone handset is off-hook and the other being a data transmission or modem mode when the telephone handset is on-hook.

4. A system according to claim 3, wherein each user-station (10 etc) includes further function-controlled means (N1, Y2, Y3, KE, KL, KD) for autodialling the central station when the telephone handset is "on-hook", at least when a transaction data message is assembled.

5. A system according to claim 3 or claim 4, wherein data transmission or modem mode is serial under control of the central station.

6. A system according to any one of claims 3 to 5, wherein some only of outgoing telephone calls are subject to authorised user access control and assembling transaction data.

7. A system according to any one of claims 2 to 6, wherein the means (MCC etc) for providing control functions at each user-station (10 etc) includes means (CR) for controlling access on the basis of which of identified users is authorised for any or selected use of that user station.

8. A system according to any preceeding claim, wherein the telephone handset (10) is controlled for normal response on incoming telephone calls, i.e. not subject to authorised user access control nor to assembling transaction data.

9. A system according to claim 8, wherein reader means (CR) services identifier devices that are programmable as to storing information additional to simple user-identification, such as company/subsidiary/ department and allocated resources.

10. A system according to claim 12, wherein the reader means (CR) serves in checking (MCC) identifier devices via device-stored check information.

0234711

FIG.1

FIG.4

FIG. 2

FIG. 3

## Card Reader

CARDREADER ENABLE

READ CARD

CRC

SERIAL  I/F

SI

DB

| | |
|---|---|
| 0 0 | CO / DEPT |
| 0 1 | CARD No |
| 0 2 | RESOURCES |

CR

| | |
|---|---|
| 0 E | ADJUSTER |
| 0 F | CHECK SUM |

SC

Card

RECEIVE CARD REGISTERS

DENY ACCESS

N

CHECK SUM

Y

N

CHECK RES.

Y

ENABLE RESOURCE

System Action

SA

## FIG. 5